# EUROPEAN PATENT SPECIFICATION

(11) **EP 1 931 167 B1**
(45) Date of publication and mention of the grant of the patent: **29.08.2012**
(21) Application number: 06025360.6
(22) Date of filing: 07.12.2006
(51) Int. Cl.: H04Q 11/04

(54) **A switch module in a distribution point in the field of telecommunications and assemblies including as well as methods of using same**
Schaltmodul in einer Verteilstelle im Telekommunikationsbereich und Baugruppen damit, sowie Verwendungsverfahren dafür
Module de commutation pour point de distribution dans le domaine des télécommunications, son assemblage et son procédé d'utilisation

(43) Date of publication of application: 11.06.2008
(73) Proprietor: 3M Innovative Properties Company, St. Paul, MN 55133-3427 (US)
(72) Inventor: Bund, Christine, 42111 Wuppertal (DE); Denter, Friedrich Wilhelm, 44575 Castrop-Rauxel (DE); Mansholt, Michael, 50827 Köln (DE); Denne, Douglas J., Austin, TX 78759 (US)
(74) Representative: Bergen, Katja

(56) References cited:
- EP-A- 1 229 706
- EP-A2- 0 858 221
- WO-A-01/20922
- WO-A-2005/091613
- WO-A-2006/063951

## Description

### Technical field

The invention relates to a switch module in a distribution point in the field of telecommunications, an assembly having the switch module, a distribution point having the switch module or the assembly, a method of connecting a subscriber line with a telecommunications carrier and a use of a switch module for connecting a subscriber line with a telecommunications carrier.

### Background of the invention

In the field of telecommunications, numerous customers are connected with the switch of a telecommunications company via telecommunications lines. Such customers are sometimes referred to as subscribers. The switch is often called an exchange or "PBX" (central office exchange operated by the telecommunications company). The telecommunications company, which may also be called a telecommunications carrier, may be an incumbent local exchange carrier (ILEC) or a competitive local exchange carrier (CLEC). In the course of telecommunication deregulation, there have been efforts to allow CLECs to share telecommunications lines with the ILECs. The goal is to provide cost-effective solutions for the subscribers. Many subscribers are accordingly choosing CLECs for providing at least some of the different types of telecommunications services as detailed below. However, such a change of the telecommunications carrier may be inefficient, as a service person is required to move to a distribution point, that may be an outside cabinet, to change the connections. It may also be inconvenient for the subscriber that it may take a few days, before this task can be performed by a service person.

Between the subscriber and the switch, sections of telecommunications lines are connected with telecommunications modules. Telecommunications modules establish an electrical connection between a first wire attached to the telecommunications module at a first side and a second wire attached to the telecommunications module at a second side. The wires of one side can also be called incoming wires and the wires of the other can be called outgoing wires. Plural telecommunications modules can be put together at a distribution point, such as a main distribution frame, an intermediate distribution frame, an outside or remote cabinet or a distribution point located, for example, in an office building or on a particular floor of an office building. To allow flexibility in wiring, some telecommunications lines are connected with first telecommunications modules in a manner to constitute a permanent connection. Such a distribution point can be accommodated in a designated room, cabinet, closure or box located either inside or outside a building, as well as in manholes, i.e., underground holes that can be adapted to allow an individual to climb into the hole and provided with a cover.

To allow versatility in wiring, some telecommunications lines are connected with first telecommunications modules in a manner to constitute a permanent connection. Versatility is realized by so-called jumpers or cross connects that connect contacts of the first telecommunications module with contacts of a second telecommunications module in a versatile manner. These jumpers can be changed when, for example, a person moves within an office building to provide a different telephone (i.e., a different telephone line) with a telephone number the relocated person intends to keep. In the telecommunications module, disconnection points can be located in the electrical connection between the two sides. At such disconnection points, disconnection plugs can be inserted to disconnect the line. Protection plugs or magazines may also be connected at a disconnection point to the module to protect equipment connected to the wires from overcurrent and overvoltage. Test plugs can also be inserted at a disconnection point in order to test or monitor a line.

Recently, Asymmetric Digital Subscriber Line (or "ADSL") technology has spread widely in the field of telecommunications. This technology allows at least two different signals to be transmitted on a single line and is achieved by transmitting the different signals at different frequencies along the same line. Signals are combined at a particular point in the telecommunications line and split at another point. In particular, at the subscriber side separate voice and data signals are combined and sent to the central office over a single line. In the central office or remote location (or remote terminal) the combined signal is split. For the transmission of voice and data signals to the subscriber, separate voice and data signals are combined at the central office or remote terminal, sent to the subscriber and split at the subscriber side. After splitting, the so-called "plain old telephone service" (or "POTS") or ISDN can be used to transmit voice signals. The remaining part of the split signal can be used to transmit data or other information. Splitters, which are used to split or combine the signal, can generally be arranged at any distribution point. In this context, a POTS wire or POTS jumper indicates a wire that is connected with an exchange of the telecommunications company. A line connection indicates a wire that leads to the subscriber or customer, and, as discussed in more detail below, a DSL-wire indicates a wire that is connected with a DSLAM or other DSL service equipment and can thus, for example, transmit data. A DSLAM (Digital Subscriber Line Access Multiplexer) processes the data signal.

WO 01/20922 A discloses a cross connect system in a MDF.

EP 1 175 078 A2 is related to a system and a method for providing data and voice services on a shared line having a cross-connect physical layer switching system integrated into a central office, however besides an MDF. The cross-connect physical layer switching system allows both the ILEC and the CLEC to access a test head which may be controllably connected to the shared line. The system requires a splitter.

WO 01/45452 describes systems and methods for electronically managing DSL connections having a controllable matrix of relays. The matrix is provided outside an MDF and allows "any to any" connections through a plurality of relays or switches.

### Summary of the invention

The invention provides switch modules in the field of telecommunications which allow versatile and efficiently controllable connections between subscribers and telecommunications carriers.

In another aspect, the invention provides assemblies and distribution points having an improved switch module.

In yet another aspect, the invention provides a novel use of a switch module. Whereas the below-mentioned applicants' patent application WO 03/079599 A2 is related to the use of a switch module for connecting a telecommunications line with a test device, the invention, for the first time, suggests to use a switch module to selectively connect a subscriber line with an exchange of a telecommunications carrier selected from two or more telecommunications carriers or with equipment of one and the same carrier selected from different types of equipment providing different types of services. Different types of services may be different types of DSL, existing services and next generation services etc.. The term "exchange" used herein may mean any type of telecommunications equipment. The above difference also applies in view of below mentioned applicants' patent application EP 06 018 131.0 related to the use of a switch module for bypassing a splitter.

### Brief description of the drawings

The invention will be described hereinafter in part by reference to non-limiting examples thereof and with reference to the drawings, in which
FIG. 1 schematically shows a switch module according to a first embodiment of the invention;
FIG. 2 schematically shows the switch module of FIG. 1 in an assembly according to a first embodiment of the invention;
FIG. 3 schematically shows an assembly according to a second embodiment of the invention;
FIG. 4 schematically shows an assembly according to a third embodiment of the invention;
FIG. 5 schematically shows an assembly according to a fourth embodiment of the invention;
FIG. 6 schematically shows an assembly according to a fifth embodiment of the invention;
FIG. 7 schematically shows an assembly according to a sixth embodiment of the invention;
Fig. 8 schematically shows an assembly according to a seventh embodiment of the invention;
Fig. 9 schematically shows an assembly according to a eighth embodiment of the invention; and
Fig. 10 schematically shows an assembly according to a ninth embodiment of the invention;

### Detailed description of preferred embodiments

The switch modules described herein are provided in a distribution point, such as a main distribution frame ("MDF") or a remote telecommunications cabinet. The switch modules are generally units that may be handled separately from other units (e.g., other modules such as general telecommunications modules) not only during their manufacture but also as they are installed or used at a distribution point.

One or more of the modules described above or below may include a housing that comprises one or more housing parts made of, for example, an insulating material such as plastic. As the modules may be attached and electrically connected with each other, the modules, especially the housings of the modules, may include mechanical connectors such as latch hooks, brackets and/or recesses or openings adapted to cooperate with latch hooks, brackets or similar contours. To establish an electrical connection the modules may have exposed contacts that extend from the insulating housings or are accessible through openings formed in the housings. For example, one or more contacts of a first module may project from the module and may be insertable into an opening formed in a second module to connect the contacts of the first module with the contacts of the second module. One or more of the modules described above or below may be provided as a strip that may have one, two or more preferably parallel rows of contacts. Plural strips may be collected in one or more blocks that may have a backplane, such as a printed circuit board, on which contacts may be provided. When such a block comprises one or more switches as described below, the block may be considered a switch module according to the present invention. When a strip as described above or a similar module comprises a switch as described below, the strip may be considered a switch module according to the present invention.

The switch modules described herein may be located in any type of distribution point, including in a main distribution frame, an intermediate distribution frame, a remote cabinet or any other remotely located distribution point. The switch modules and the telecommunications modules of the invention may be located in different locations (i.e., physically separated) and may be connected, for example, by jumpers. At least some of the switch modules and the telecommunications modules may be collected in one or more shelves. The assemblies described herein also relate to such arrangements.

The provision of the switch modules in a distribution point, such as an MDF or a remote cabinet, may provide a fully integrated assembly providing not only those connections that are required in a telecommunications network, but also the possibility to switch a particular subscriber line between different telecommunications carriers. In other words, the switch modules allow for the preparation of distribution points in which the necessary connections are prepared and may readily be changed by appropriate switching operations. Thus, the invention allows the switching between different carriers or providers or between different transmission equipment of the same carrier providing different types of services which both receive and transmit signals (i.e., the telecommunications line carries bidirectional traffic). In addition, it is possible to connect a subscriber line with a test head or similar device which implies unidirectional traffic toward the test head. Further, whereas a test device is usually "switched to" a line (i.e., constitutes an additional connection in addition to a remaining connection) such as a connection to a telecommunications carrier, the switch modules described herein switch "between" different service contacts, i.e. the connection to a first pair of service contacts is interrupted and the connection to a second pair of service contacts is established when the switch is operated.

The switch module described herein has one single pair of "in" contacts adapted to transmit an incoming signal. The incoming signal may be a line signal Such that a subscriber line is connected with the pair of in contacts. In the field of DSL, the incoming signal may be a combined signal. The switch module generally further has a first pair of service contacts adapted to transmit a POTS, DSL or combined signal. The service contacts are generally provided to allow one or more services, for example telecommunications carriers to provide their service through the service contacts. The switch module may, for example, connect a subscriber line with the exchange of a telecommunications carrier through the above-described contacts. To allow for a subscriber line to be readily connected to an alternative telecommunications carrier, at least one further pair of service contacts adapted to transmit a POTS, DSL, test, monitoring or combined signal is provided.

The service contacts may transmit a combined signal when a subscriber chooses to ask a particular telecommunications carrier to provide plural telecommunications services such as POTS and DSL. In the assemblies described herein, however, the signal may be split at an appropriate point along the telecommunications line, and only the POTS or the DSLAM signal may be forwarded to a particular telecommunications carrier. At least one pair of service contacts may also be used to transmit a test or monitoring signal to test a line or monitor the same.

One or more of the above-described contacts may be adapted to directly connect wires. Thus, the contacts may be provided as IDCs (insulation displacement contacts), wrap pins, around which the exposed metal part of a wire can be wrapped, or any other suitable type of contacts. The contacts may also be provided as contact points on a printed circuit board that may be provided as a backplane in a telecommunications block as described above. A wire may be connected with such a contact provided on a printed circuit board in a fixed manner, such as by soldering. The connections between wires and contacts may also be disconnectable. Thus, suitable connectors, such as sockets, may be provided on a printed circuit board, and a plug may be provided at the end of a wire or wire pair. Moreover, plural wires may be collected in a connector plug having plural contacts. When wires are directly connectable with at least one pair of contacts, the switch module provides a fully integrated solution. In other words, the switch module may be considered a telecommunications module, as wires are connectable therewith. However, the contacts of the switch module may also be provided so that they may be electrically connected with contacts of a further module, such as a telecommunications module. In particular, the telecommunications module may have contacts to which wires can be directly connected. The switch module may in this case be combined with the telecommunications module by attaching the switch module to the telecommunications module to connect the contacts of the switch module and the contacts of the telecommunications module with one another. In this context, the entire disclosure of the applicants' European patent application EP 06 018 131.0 filed August 30, 2006 is incorporated herein by reference, particularly with regard to an assembly having a telecommunications module and a switch module.

In the switch modules described herein, one subscriber may be connected with a few different carriers or service providers in an efficient manner and through a relatively small and simple switch module. This increases efficiency compared to known "any to any" system configurations and allows the switch and the switch module to be incorporated in a distribution point such as an MDF. Thus, no re-wiring that may be costly and time consuming may be needed.

To allow a subscriber to be selectively connected with one of two or more telecommunications carriers, the switch modules generally have at least one remotely controllable switch adapted to switch between the first pair of service contacts and the at least one further pair of service contacts. The switch may be any electric or electronic component that allows to disconnect a first connection and establish a second connection. The second connection may be selected from a group of several connections including connections to different types of transmission equipment of one and the same carrier. The switch may be provided as a relay, a microswitch or any other suitable component.

Thus, when a subscriber decides to change his telecommunications carrier for some or all services, the connection to this carrier (such as a CLEC or a second CLEC) for particular services can be readily completed by performing the required switching operation. This operation may advantageously be remotely controlled by addressing the required switch and causing it to switch to a different pair of service contacts. With regard to any details related to the connections between the switch module and a central location from where the switch operation is initiated, for example via a bus, the disclosure of applicants' above-mentioned European patent application EP 06 018 131.0 is again incorporated herein by reference. The SESYS^{™} System available from 3M Telecommunications may be installed as a bus system for connecting one or more switch modules as described herein.

Since the switches in the switch modules of the invention are remotely controllable, any changes of the telecommunications carriers can be effected immediately and within a few seconds. This is particularly advantageous compared to current configurations in which a service person has to be sent to the distribution point (e.g., a remote cabinet) to change one or more connections. This may be time consuming, costly and inconvenient for both the service provider and the subscriber, as the subscriber may have to wait for as long as a few days for the connections to be changed. The provision of different telecommunications services by different carriers or providers is sometimes called "unbundling," as a "bundle" of service lines is separated and single lines are connected with different carriers. The present invention is particularly useful in such a situation. This also applies to line sharing, where a subscriber line is shared by different carriers and there is a desire to switch between two or more carriers providing a specific type of telecommunications service. These situations, i.e. "unbundling" and "line sharing", also apply, when at least one of the services provided involves testing and/or monitoring a telecommunications line.

Generally, the switch modules described herein have one single pair of in contacts. Thus, a single subscriber line may be connected with the module. It may be advantageous, however, to provide two or more in contacts on the switch module (which may have a strip-like appearance) to connect two or more subscriber lines with a single switch module and provide the two or more pairs of service contacts to which a single subscriber line may be switched in the same switch module.

The invention also provides assemblies in the field of telecommunications having at least one switch module and at least one telecommunications module having contacts adapted to connect wires directly therewith. As outlined above, the switch modules generally have both in contacts and service contacts. One or more switch modules may, however, be connected with one or more telecommunications modules which may be formed as specific modules, such as "in modules" or "service modules". In other words, specific "in modules" may be provided to connect only incoming wires therewith. Other modules may be provided to which only POTS, DSL or test wires are connected. Moreover, plural wires which lead to the exchange of a particular telecommunications carrier may be connected with a specific telecommunications module, and these wires may be adapted to transmit only POTS, DSL or combined signals or signals for test purposes. In this case, specific modules are reserved for specific telecommunications carriers, and an advantageous separation in a distribution point may be realized. For example, CLECs may have access to their specific modules, whereas an ILEC retains control of other modules including the switch modules. The service contacts in the switch modules and any plural service present in a telecommunications module may generally be considered service points. Thus, the invention provides the opportunity to switch between two or more service points.

The connection between the one or more switch modules and the one or more telecommunications modules may advantageously be constituted by wires. Thus, required connections for one or more CLECs may be provided when an MDF is prepared, and the subscriber line may be connected to the desired telecommunications carrier by activating one or more switches at a future time.

Generally, the switch modules described herein may be used without DSL or splitters. However, the switch modules may be particularly advantageous in connection with DSL technology, for example to allow a CLEC to provide DSL services and allow the ILEC to continue POTS or vice versa. Thus, it may be advantageous to provide at least one splitter circuit in the described assemblies. When splitter circuits are provided, they may advantageously be incorporated into a switch module or a telecommunications module. It may also be advantageous to provide one or more DSLAMs in the assemblies described herein to complete and integrate the equipment related to DSL. Moreover, the assemblies described herein may have one or more assemblies as described in the applicants' patent application EP 06 018 131.0, incorporated herein by reference, that allows a splitter to be bypassed.

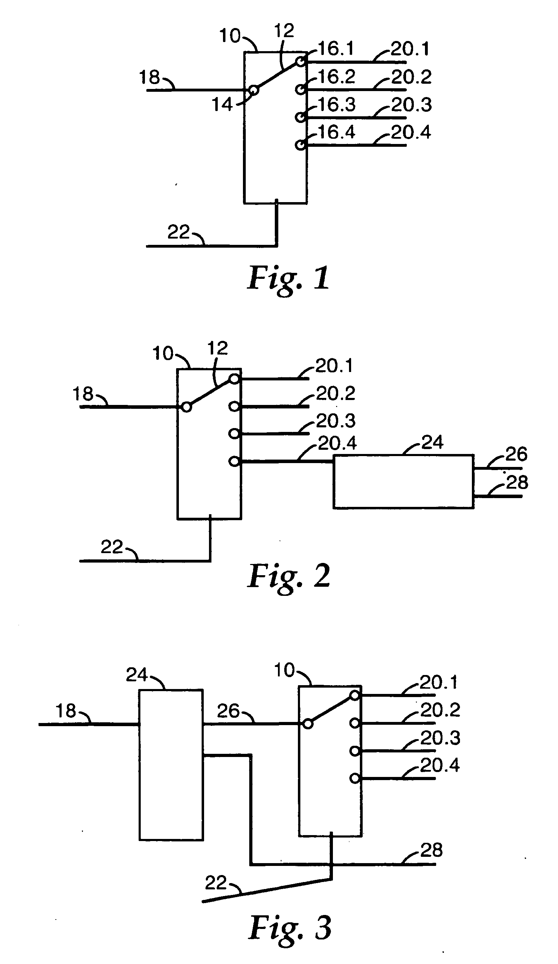

Turning now to FIG. 1, which is a schematic view of a switch module 10. As schematically shown, the switch module 10 has a switch 12 provided between a pair of in contacts 14 and plural pairs of service contacts 16.1 to 16.4. An incoming or subscriber line 18 is connected with the pair of in contacts 14, and a service line 20.1 to 20.4 is connected with each of the pairs of service contacts 16. As schematically shown, a control line 22 (that may, for example, be part of the above-mentioned SESYS system) is connected to the switch module 10 at switch 12 to allow switch 12 to be remotely controlled. In the embodiment shown any type of signal may be transmitted via the subscriber line 18 and a selected one of the service lines 20.1 to 20.4. The transmitted signal may be a combined signal, and the telecommunications carrier whose exchange is connected with service line 20.1 may provide all telecommunications services. However, the transmitted signal may only be POTS or DSL, a narrow band or broad band signal, which is transmitted to the particular carrier providing these services. Moreover, signals may also be transmitted in the other direction, i.e., from the carrier to the subscriber.

As can be seen from FIG. 1, the switch 12 allows the subscriber line 18 to be selectively connected with a selected one of the service lines 20.1 to 20.4. In other words, when a subscriber wants to change the carrier switch 12 is activated to connect the subscriber line 18 through the switch 12 with the selected service line 20.1 to 20.4.

FIG. 2 schematically shows an assembly having the switch module 10 and a telecommunications module connected by a service line 20.4. It should be noted that further telecommunications modules may be connected with further service lines 20.1. to 20.3. In the embodiment shown, the telecommunications module may be a splitter module 24 that splits the combined signal received through service line 20.4 into a broad band or DSL signal further transmitted through DSL line 26 and a POTS or narrow band signal further transmitted through POTS line 28. In the situation shown in FIG. 2, the subscriber line 18 is connected with service line 20.1 which may be connected with the exchange of a first CLEC. Second service line 20.2 may be connected with the exchange of a second CLEC, and service line 20.3 may be provided for testing and monitoring. However, when the subscriber wants to change to one or more other carriers, the switch 12 may be activated to connect the subscriber line 18 with another CLEC through service line 20.2 or to the splitter module 24 which splits the signal so that the DSL signal may, as one example, be transmitted to a third CLEC through DSL line 26 and the POTS signal may be transmitted to the ILEC through POTS line 28. For the sake of completeness, a control line 22 is also shown in FIG. 2.

This also applies to FIG. 3. However, in the embodiment shown in FIG. 3, a splitter module 24 is provided, seen from the subscriber line 18, "before" the switch module 10. In other words, the combined signal transmitted through subscriber line 18 is split, and the split signal is further transmitted through DSL line 26 and POTS line 28. As shown for the DSL line 26, the switch module 10 may be used to allow the connection with a selected one of two or more telecommunications carriers through service lines 20.1 to 20.4. In the embodiment shown, a single POTS line 28 is provided, which may be connected, for example, with the exchange of a particular telecommunications carrier such as the ILEC. However, a further switch module 10 could be provided to connect POTS line 28 and allow switching between plural carriers.

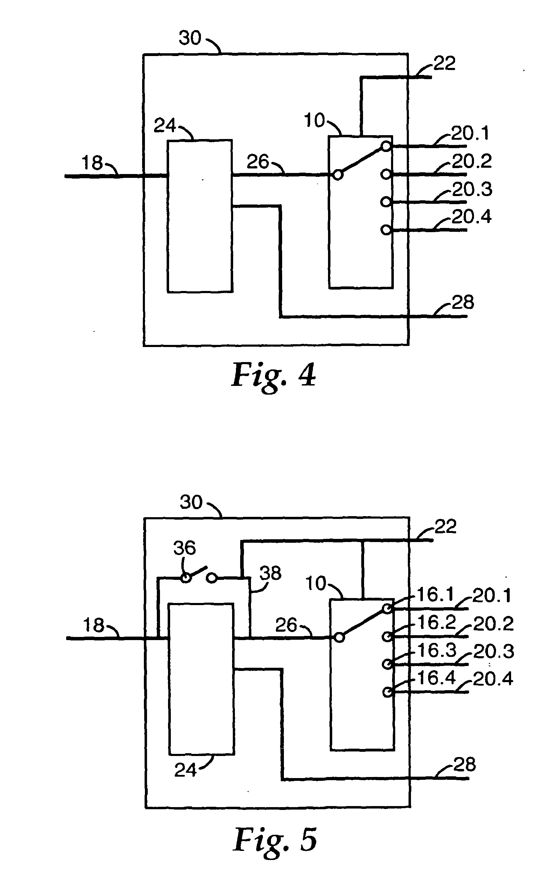

FIG. 4 schematically shows the assembly of FIG. 3 integrated into a switch/splitter module 30. The outside connections, such as the connection to the subscriber line 18, the control line 22, the service lines 20.1 to 20.4 and the connection to the POTS line 28 are essentially the same as those for the assembly of FIG. 3. However, with the switch/splitter module, a module is provided into which the above-described functions (i.e., splitting, switching and allowing the necessary connections) are integrated. In particular, the switch/splitter module 30 may be fully integrated into a single housing, with the DSL line 26, for example, being provided as an internal connection. In contrast, in the assembly of FIG. 3, the DSL line 26 may be constituted by a wire.

With respect to FIG. 4, it may also be noted that the switch/splitter module 30 may have a functionality of allowing the splitter circuit in the splitter module 24 to be bypassed. Details in this respect may be taken from the applicants' European patent application EP 06 018 131.0 which is incorporated herein by reference for such purpose.

FIG. 5 shows an assembly similar to that of FIG. 4. In the assembly of FIG. 5, there is the additional possibility to bypass a splitter provided in the splitter module 24. For this purpose, the control line 22 extends to a further switch 36 that is provided to close a bypass line 38 bypassing a splitter provided in splitter module 24. Details regarding such an assembly, i.e. an assembly allowing a splitter to be bypassed, may be taken from the applicants' patent application EP 06 018 131.0. The above-mentioned SESYS-system may be used both for addressing the switch 36 that is related to bypassing a splitter, and the switch 12 switching between the service contacts 16.

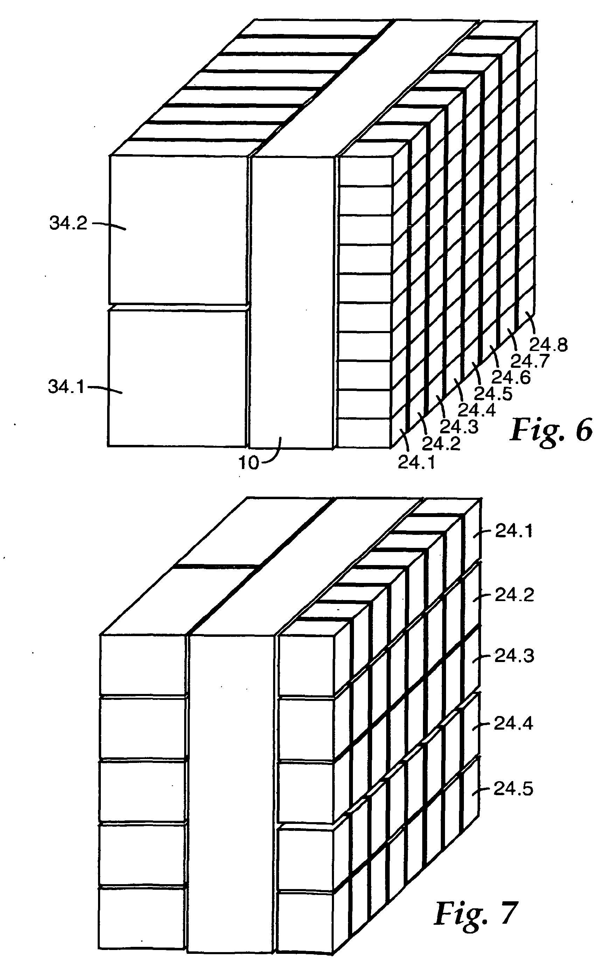

FIG. 6 shows an assembly of a switch module 10, plural telecommunications modules 24.1 to 24.8 and plural splitter modules 34. In the embodiment shown, the telecommunications modules 24 are provided in strip-like configuration, with the strips extending vertically. The telecommunications modules 24 may have contacts to which wires (not shown) are directly connectable. The contacts may be arranged in one, two or more parallel rows that may extend in a vertical direction in the assembly shown in FIG. 6. A first row of contacts may be reserved as in contacts, and a second row of contacts may be reserved as service contacts. However, as indicated in FIG. 6, different areas on the telecommunications modules 24 (i.e., different areas along the "height" of the telecommunications modules 24) may be reserved for particular wires. For example, the upper half of each telecommunications module 24 may be associated with a particular subscriber, and the lower half may be associated with a second subscriber. As regards the particular subscriber, three pairs of service contacts may be provided in the uppermost and the lowermost region of the telecommunications module 24. The POTS contacts may be provided in the center of each telecommunications module 24, i.e. adjacent to each other for two subscribers. Line contacts for connecting an incoming wire may be provided between the POTS and the service contacts. All contacts of the telecommunications module 24 may be exposed and accessible at a front side of the module 24 (i.e., the right side in FIG. 6).

As can be seen in FIG. 6, the switch module 10 may be provided at a rear sides of the modules 24. In particular, contacts may extend from the rear side of the telecommunications modules 24 or from the front side of the switch module 10 and may be insertable into openings provided in the front side of the switch module 10 or the rear side of the telecommunications modules 24 respectively. In the situation shown in FIG. 6 (i.e., with the modules 10 and 24 attached to each other) the electrical connection may be formed through the above-described contacts which may be present at the interface between switch module 10 and telecommunications modules 24. This generally also applies to the interface between the switch module 10 and the splitter modules 34. As can be seen in the illustrated embodiment, a single line splitter is provided for each subscriber, i.e., two splitter modules 34.1 and 34.2 are associated with a particular telecommunications module 24. The splitter modules 34 do not necessarily have to be present, in other words switch module 10 may also be used with one or more telecommunications modules 24 without the splitter modules 34. Moreover, the switch module 10 may be "sandwiched" between the telecommunications modules 24 and splitter modules 34. Thus, the switch module 10 may also be present at the rear of the assembly with the splitter modules 34 being sandwiched between the switch module and the telecommunications modules. With the arrangement shown in FIG. 6, the splitter modules 34 may be attached to the switch module 10 one by one. In other words, only the lines of those subscribers that require DSL services may be equipped with splitter modules 34, allowing incremental and, therefore, efficient investment.

FIG. 7 shows that the assembly shown in FIG. 6 may also be provided in a different orientation, i.e. with the strip-like telecommunications modules 24.1 to 24.5 extending horizontally. Similarly as shown in FIG. 6, the same areas along the width of telecommunications modules 24 are reserved for specific wires for all telecommunications modules. For example, the center contacts of all telecommunications modules 24 may be reserved for POTS. Although not shown in the drawings, wire guides (e.g., in the form of wire guide plates having plural, essentially parallel or concentric guides such as channels) may be provided between one or more telecommunications modules 24. The assembly of FIG. 6 having, for example, eight telecommunications modules, may be prepared for the services related to 16 subscribers, and the exemplary embodiment of FIG. 7 having five telecommunications modules may be provided for 10 subscribers.

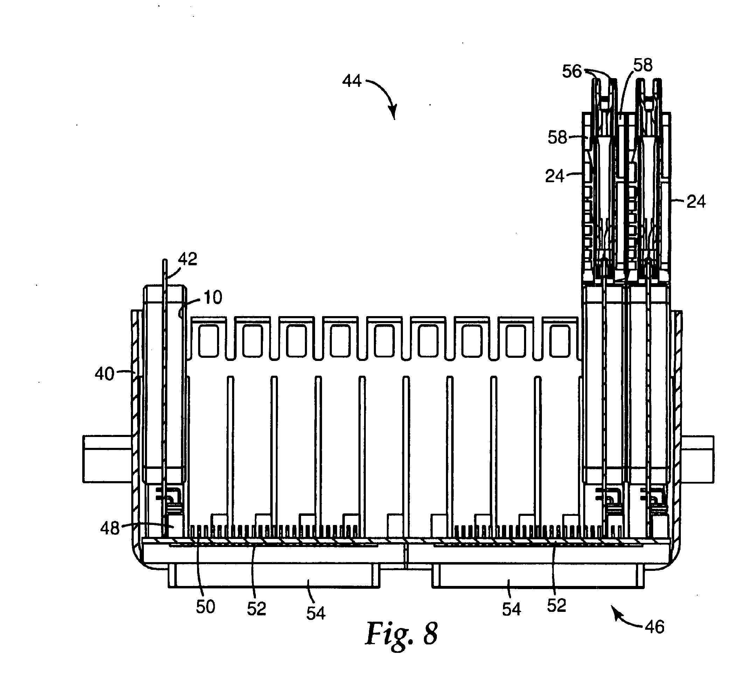

FIG. 8 shows a side view of an assembly according to the present invention, which is provided as a block. The block may have a trough-like base 40 that may accommodate plural switch modules 10. In the embodiment shown, 12 switch modules may be accommodated in the block. The switch modules may have a printed circuit board (PCB) 42 which may be exposed at a first side, that may be a front side 44 of the block. In the embodiment shown, the PCB 42 may also be exposed at a rear side 46, and a suitable connector 48 may be provided at this rear side 46 to allow connections with pins 50 provided on one or more PCBs 52 of the block shown in FIG. 8. Thus, plural service contacts of the switch module 10 may be collected in one or more connectors 48. At the rear side 46 of the block shown in FIG. 8, plural pins 50 may be connected with one or more sockets 54 (two sockets 54 are shown in FIG. 8). These sockets may be Dsub connectors and may be used to connect a plug having a cable connected with a DSLAM.

As shown in FIG. 8, telecommunications modules 24 may be provided at the front side 44 of the block and each electrically connected with a switch module 10. For this purpose, the rear of the telecommunications modules 24 is open to allow the exposed end of the PCB 42 of the switch module 10 to be inserted and establish electrical connections with contacts of the telecommunications modules. In the embodiment shown, each telecommunications module 24 comprises two rows of contacts 56, the rows of contacts extending perpendicular to the plane of the drawing of FIG. 8.
Finally, wire guide plates 58 are provided at each lateral side of the telecommunications modules 24.

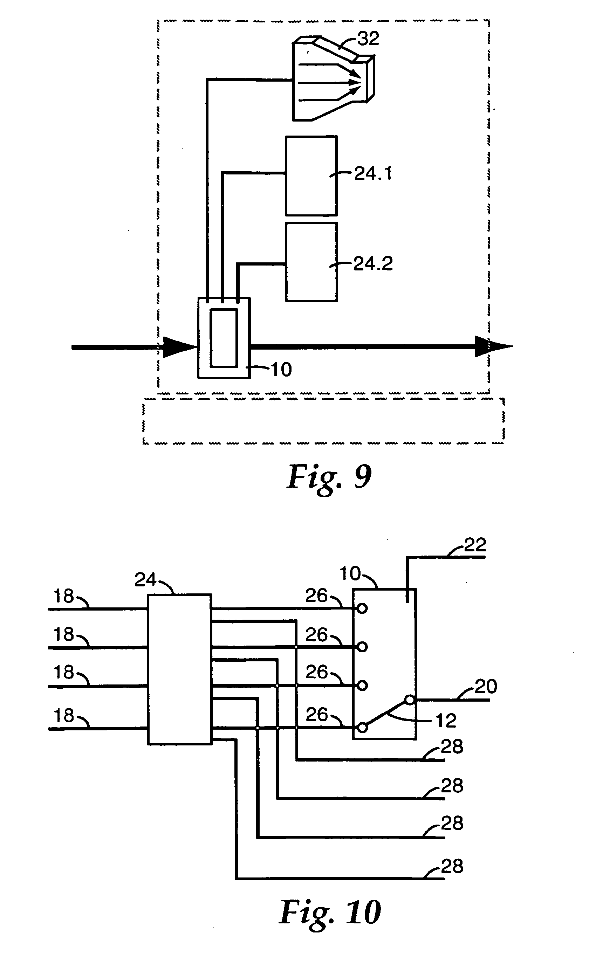

FIG. 9 shows an assembly which may, for example, be provided in a remote cabinet. In the embodiment shown, the assembly has a switch module 10, two telecommunications modules 24.1 and 24.2 and DSLAM 32. The telecommunications modules 24 may constitute service points for different CLECS, and the DSLAM 32 may be associated with the ILEC. This clearly separates the modules and devices of different carriers from each other and ensures that access is given only those modules that are within the responsibility of a particular telecommunications carrier.

FIG. 10 shows an assembly similar to that of FIG. 3 having a splitter module 24 splitting the signal transmitted by subscriber lines 18, and the broad band signal is transmitted to a switch module 10. The switch 12 of the switch module 10 is controlled via control line 22. In this case, the switch is provided to allow a selected one of the DSL lines 26 to be connected with a DSLAM (not shown) via service line 20 connected with a pair of in contacts of the switch module 10. The narrow band signal is transmitted to the appropriate telecommunications carrier via a POTS line 28 provided for each subscriber.

The present invention has now been described with reference to several individual embodiments. The foregoing detailed description has been given for clarity of understanding only. No unnecessary limitations are to be understood or taken from it. All references to right, left, front, rear, up and down as well as references to directions are exemplary only and do not limit the claimed invention. It will be apparent to those persons skilled in the art that many changes can be made in the embodiments described without departing from the scope of the invention. Thus, the scope of the present invention should not be limited to the details and structures described herein, but rather by the structures described by the language of the claims, and the equivalents of those structures.

## Claims

1. A switch module (10) in a telecommunications distribution point, comprising:
one single pair of in contacts (14) adapted to transmit an incoming signal,
at least one first pair of service contacts (16.1) adapted to transmit a POTS, DSL or combined signal,
at least one further pair of service contacts (16.2, 16.3, 16.4) adapted to transmit a POTS, DSL, test, monitoring or combined signal,
**characterized in that**
the switch module (10) further comprises at least one remotely controllable switch (12) adapted to switch between the first pair of service contacts (16.1) and the at least one further pair of service contacts (16.2, 16.3, 16.4) to selectively connect the one single pair of in contacts (14) with the first pair of service contacts (16.1) or one of the further pairs of service contacts (16.2, 16.3, 16.4).

2. The switch module in accordance with claim 1, wherein wires (18, 20) are directly connectable with at least one pair of contacts.

3. An assembly in the field of telecommunications having at least one switch module (10) in accordance with claim 1 or 2 and at least one telecommunications module (24) having contacts adapted to connect wires directly therewith.

4. The assembly in accordance with claim 3, wherein at least one switch module (10) and at least one telecommunications module (24) are connected by wires (20.4, 26).

5. The assembly in accordance with claim 3 or 4, further having at least one splitter circuit.

6. The assembly in accordance with claim 5, wherein the splitter circuit is incorporated into the switch module (10) or the telecommunications module (24).

7. The assembly in accordance with any of claims 3 to 6, further having at least one DSLAM (32).

8. A telecommunications distribution point, such as an MDF or a remote cabinet, in the field of telecommunications, having at least one switch module (10) or at least one assembly in accordance with one of the preceding claims.

9. A use of a switch module (10) or an assembly in accordance with one of the claims 1 to 7 in a telecommunications distribution point, such as an MDF or a remote cabinet, in the field of telecommunications comprising one single pair of in contacts (14) adapted to transmit an incoming signal, at least two pairs of service contacts (16.1 to 16.4) adapted to transmit a POTS, DSL or combined signal, and at least one remotely controllable switch (12), for selectively connecting a subscriber line (18) with an exchange of a telecommunications carrier selected from two or more telecommunications carriers.

## Patentansprüche

1. Schaltmodul (10) in einer Telekommunikations-Verteilerstelle, umfassend:
ein einziges Paar von Eingangskontakten (14), die zum Übertragen eines ankommenden Signals ausgelegt sind,
mindestens ein erstes Paar von Betriebskontakten (16.1), die zum Übertragen eines POTS-, DSL- oder kombinierten Signals ausgelegt sind,
mindestens ein weiteres Paar von Betriebskontakten (16.2, 16.3, 16.4), die zum Übertragen eines POTS-, DSL-, Test-, Überwachungs- oder kombinierten Signals ausgelegt sind,
**dadurch gekennzeichnet, dass**
das Schaltmodul (10) ferner mindestens einen fernsteuerbaren Schalter (12) umfasst, der zum Schalten zwischen dem ersten Paar von Betriebskontakten (16.1) und dem mindestens einen weiteren Paar von Betriebskontakten (16.2, 16.3, 16.4) ausgelegt ist, um das einzige Paar von Eingangskontakten (14) mit dem ersten Paar von Betriebskontakten (16.1) oder einem der weiteren Paare von Betriebskontakten (16.2, 16.3, 16.4) selektiv zu verbinden.

2. Schaltmodul nach Anspruch 1, wobei Kabel (18, 20) mit mindestens einem Paar von Kontakten direkt verbunden sein können.

3. Baugruppe auf dem Gebiet der Telekommunikation, die mindestens ein Schaltmodul (10) nach Anspruch 1 oder 2 und mindestens ein Telekommunikationsmodul (24) hat, das Kontakte hat, die zum direkten Verbinden der Kabel damit ausgelegt sind.

4. Baugruppe nach Anspruch 3, wobei mindestens ein Schaltmodul (10) und mindestens ein Telekommunikationsmodul (24) durch Kabel (20.4, 26) verbunden sind.

5. Baugruppe nach Anspruch 3 oder 4, die ferner mindestens eine Verteilerschaltung hat.

6. Baugruppe nach Anspruch 5, wobei die Verteilerschaltung in das Schaltmodul (10) oder das Telekommunikationsmodul (24) integriert ist.

7. Baugruppe nach einem der Ansprüche 3 bis 6, die ferner mindestens einen DSLAM (DSL-Zugangskonzentrator) (32) hat.

8. Telekommunikationsverteilpunkt, wie zum Beispiel ein MDF oder ein Fernsteuerschrank auf dem Gebiet der Telekommunikation, der mindestens ein Schaltmodul (10) oder mindestens eine Baugruppe nach den vorhergehenden Ansprüchen hat.

9. Verwendung eines Schaltmoduls (10) oder einer Baugruppe nach einem der Ansprüche 1 bis 7 in einem Telekommunikationsverteilpunkt, wie zum Beispiel ein MDF oder ein Fernsteuerschrank auf dem Gebiet der Telekommunikation, die ein einziges Paar von Eingangskontakten (14) hat, welche zum Übertragen eines ankommenden Signals ausgelegt sind, mindestens zwei Paar von Betriebskontakten (16.1 bis 16.4), die zum Übertragen eines POTS, DSL oder kombinierten Signals ausgelegt sind, und mindestens einen fernsteuerbaren Schalter (12) zum selektiven Verbinden einer Anschlussleitung (18) mit einer Durchgangsvermittlungsstelle eines Telekommunikationsbetreibers, der unter zwei oder mehr Telekommunikationsbetreibern ausgewählt ist.

## Revendications

1. Module de commutation (10) pour point de distribution de télécommunications comprenant :
une unique paire de contacts d'entrée (14) conçus pour transmettre un signal entrant,
au moins une première paire de contacts de service (16.1) conçus pour transmettre un signal STO, un signal DSL ou un signal combiné,
au moins une autre paire de contacts de service (16.2, 16.3, 16.4) conçus pour transmettre un signal STO, un signal DSL, un signal de test, un signal de surveillance ou un signal combiné,
**caractérisé en ce que**
le module de commutation (10) comprend en outre au moins un commutateur contrôlable à distance (12) adapté pour commuter entre la première paire de contacts de service (16.1) et l'au moins une autre paire de contacts de service (16.2, 16.3, 16.4) pour connecter de manière sélective l'unique paire de contacts d'entrée (14) avec la première paire de contacts de service (16.1) ou une des autres paires de contacts de service (16.2, 16.3, 16.4).

2. Module de commutation selon la revendication 1, dans lequel des fils conducteurs (18, 20) sont directement connectables à au moins une paire de contacts.

3. Ensemble dans le domaine des télécommunications ayant au moins un module de commutation (10) selon la revendication 1 ou la revendication 2 et au moins un module de télécommunication (24) ayant des contacts conçus pour y connecter directement des fils conducteurs.

4. Ensemble selon la revendication 3, dans lequel au moins un module de commutation (10) et au moins un module de télécommunication (24) sont connectés par des fils conducteurs (20.4, 26).

5. Ensemble selon la revendication 3 ou la revendication 4, ayant en outre au moins un circuit séparateur.

6. Ensemble selon la revendication 5, dans lequel le circuit séparateur est incorporé dans le module de commutation (10) ou le module de télécommunication (24).

7. Ensemble selon l'une quelconque des revendications 3 à 6, ayant en outre au moins un multiplexeur DSLAM (32).

8. Point de distribution de télécommunications, tel qu'un répartiteur principal MDF ou une armoire distante, dans le domaine des télécommunications, ayant au moins un module de commutation (10) ou au moins un ensemble selon une des revendications précédentes.

9. Utilisation d'un module de commutation (10) ou d'un ensemble selon l'une quelconque des revendications 1 à 7, dans un point de distribution de télécommunications, tel qu'un répartiteur principal MDF ou une armoire distante, dans le domaine des télécommunications, comprenant une paire unique de contacts d'entrée (14) conçus pour transmettre un signal entrant, au moins deux paires de contacts de service (16.1 à 16.4) conçus pour transmettre un signal STO, un signal DSL ou un signal combiné, et au moins un commutateur contrôlable à distance (12), pour connecter de manière sélective une ligne d'abonné (18) à un central d'opérateur de télécommunications sélectionné parmi deux ou plusieurs opérateurs de télécommunications.
